# FASCICULE DE BREVET EUROPEEN

(11) **EP 1 090 882 B1**
(45) Date de publication et mention de la délivrance du brevet: **26.11.2003**
(21) Numéro de dépôt: 00402599.5
(22) Date de dépôt: 20.09.2000
(51) Int. Cl.: C01B 39/48

(54) **Procédé de préparation d'une zéolithe de type structural MTT utilisant des germes de matériaux zéolithiques**
Verfahren zur Herstellung eines Zeoliths des EUO-Typs unter Verwendung von zeolithischen Keimen
Process for the preparation of MTT-type zeolite using zeolite seeds

(30) Priorité: 29.09.1999 FR 9912267
(43) Date de publication de la demande: 11.04.2001
(73) Titulaire: Institut Français du Pétrole, 92852 Rueil-Malmaison Cedex (FR)
(72) Inventeur: Rouleau, Loic, 69390 Charly (FR); Kolenda, Frédéric, 69630 Chaponost (FR); Benazzi, Eric, 78400 Chatou (FR)

(56) Documents cités:
- US-A- 4 650 655
- US-A- 5 321 194

## Description

### Domaine technique

La présente invention concerne un nouveau procédé de préparation d'un matériau zéolithique de type structural MTT. Cette zéolithe a généralement la formule suivante sous forme anhydre: 0 à 20 R₂O : 0-10 T₂O₃ : 100 XO₂ : où R représente un cation monovalent ou 1/n d'un cation de valence n, X représente le silicium et/ou le germanium, T représente au moins un élément choisi parmi l'aluminium, le fer, le gallium, le bore, le titane, le vanadium, le zirconium, le molybdène, l'arsenic, l'antimoine, le chrome et le manganèse.

Les zéolithes de type structural MTT telle que la zéolithe ZSM-23 sont généralement synthétisées par mélange en milieu aqueux d'une source de silice et/ou de germanium et d'une source d'au moins un élément choisi parmi l'aluminium, le fer, le gallium, le bore, le titane, le vanadium, le zirconium, le molybdène, l'arsenic, l'antimoine, le chrome et le manganèse en présence d'au moins un composé organique azoté jouant le rôle de structurant ou des précurseurs du composé organique. Le mélange est généralement maintenu à une certaine température jusqu'à la cristallisation de la zéolithe.

### Art antérieur

La zéolithe ZSM-23 de type structural MTT, déjà décrite dans l'art antérieur, présente un réseau microporeux monodimensionnel, dont le diamètre des pores est de 4,5 x 5,2 Å (1 Å = 1 Angström = 1.10⁻¹⁰ m) (« Atlas of Zeolites Structure types », W.M. Meier et D.H. Olson, 4^{ème} Edition, 1996). D'autre part, A.C. Rohmann *et al* (Zeolites, 5, 352, 1985), J.L. Schlenker *et al* (private communication, 1992) et B. Marler *et al* (J. Appl. Cryst. 26; 636, 1993) ont enseigné que le réseau cristallin était de symétrie orthorombique (Pmn2₁, a=21,5 Å, b=11,1 Å, c=5,0 Å) possédant des canaux parallèles à l'axe c, délimités par des cycles à 10 tétraèdres. Le mode de synthèse et les caractéristiques physico-chimiques de la zéolithe ZSM-23 ont été décrits dans divers brevets qui différent par la nature du structurant organique utilisé. La synthèse de cette zéolithe peut être accomplie avec au moins un structurant organique choisi parmi la pyrrolidine (US4076842), la diisopropanolamine (GB2190910), les composés de diammonium quaternaire tels que le bromure d'heptaméthonium (US4490342), le bromure d'octaméthonium (GB2202838), le bromure de dodécaméthonium (US5,405,596), les composés de triammonium quaternaire (US 5,332,566). Le mode de synthèse comprend le mélange d'un oxyde, généralement de silicium; et d'un oxyde, généralement d'aluminium, en présence du structurant.

D'autres zéolithes présentent la structure MTT et diffèrent de la zéolithe ZSM-23 par le mode de préparation, en particulier par le structurant organique utilisé. Il s'agit de la zéolithe EU-13 (EP108486) réalisée avec un sel d'ammonium ou de phosphonium quaternaire méthylée, de la zéolithe ISI-4 (EP 102497) réalisée avec l'éthylène glycol ou une monoéthanolamine, de la zéolithe SSZ-32 (US4483835) réalisée avec les dérivés imidazole ou la zéolithe KZ-1 réalisée avec diverses amines (L.M. Parker et al, Zeolites, 3,8, 1988).

### Résumé de l'invention

La présente invention concerne un procédé de préparation d'une zéolithe de type structural MTT comprenant au moins un élément X choisi parmi le silicium et le germanium et au moins un élément T choisi parmi le fer, l'aluminium, le gallium, le bore, le titane, le vanadium, le zirconium, le molybdène, l'arsenic, l'antimoine, le chrome et le manganèse, caractérisé en ce qu'on utilise des germes d'au moins un matériau zéolithique comprenant au moins un élément X' choisi parmi le silicium et le germanium et au moins un élément T' choisi parmi le fer, l'aluminium, le gallium, le bore, le titane, le vanadium, le zirconium, le molybdène, l'arsenic, l'antimoine, le chrome et le manganèse, lesdits germes étant différents de la zéolithe de type structural MTT que l'on prépare.

### Intérêt de l'invention

Le procédé selon l'invention permet de réduire le temps de cristallisation de la zéolithe MTT après formation du mélange et permet d'atteindre un rendement maximal en produit pur, ce qui procure un gain de coût. La composition du milieu réactionnel peut être plus large, ce qui procure un gain de flexibilité.

Ainsi, la demanderesse a découvert que la synthèse d'une zéolithe de type structural MTT caractérisée par l'utilisation de germes d'au moins un matériau zéolithique différent du matériau que l'on cherche à synthétiser permettait notamment d'obtenir les avantages cités ci-dessus, c'est-à-dire un gain de temps, de rendement en produit plus pur et une flexibilité de composition du mélange réactionnel.

### Description de l'invention

La présente invention concerne un procédé de préparation d'un matériau zéolithique de type structural MTT comprenant au moins un élément X choisi parmi le silicium et le germanium et au moins un élément T choisi parmi le fer, l'aluminium, le gallium, le bore, le titane, le vanadium, le zirconium, le molybdène, l'arsenic, l'antimoine, le chrome et le manganèse, caractérisé en ce qu'on utilise des germes d'au moins un matériau zéolithique comprenant au moins un élément X' choisi parmi le silicium et le germanium et au moins un élément T' choisi parmi le fer, l'aluminium, le gallium, le bore, le titane, le vanadium, le zirconium, le molybdène, l'arsenic, l'antimoine, le chrome et le manganèse, lesdits germes étant différents de la zéolithe de type structural MTT que l'on prépare.

La différence entre la zéolithe de type structural MTT que l'on cherche à synthétiser et le matériau zéolithique introduit en tant que germes se situe soit dans la différence de type structural, soit dans la différence de composition chimique de la charpente cristalline, soit dans la différence de type structural et la différence de composition chimique de la charpente cristalline.

Le procédé de préparation selon l'invention comprend le mélange en milieu aqueux d'au moins une source d'au moins un élément X choisi parmi le silicium et le germanium, d'au moins une source d'au moins un élément T choisi parmi l'aluminium le fer, le gallium, le bore, le titane, le vanadium, le zirconium, le molybdène, l'arsenic, l'antimoine, le chrome et le manganèse, d'au moins un composé organique azoté Q choisi parmi les dérivés alkylés de polyméthylène α-ω diammonium, des précurseurs correspondants audit composé organique Q, et des germes de matériau zéolithique S. L'invention est caractérisée en ce qu'on utilise en tant que germes au moins un matériau zéolithique différent de la zéolithe MTT que l'on cherche à préparer. La réaction du mélange est maintenue jusqu'à cristallisation de la zéolithe.

Le dérivé alkylé de polyméthylène α-ω diammonium, jouant le rôle de structurant organique, utilisé plus particulièrement pour la synthèse de la zéolithe ZSM-23, est défini par la formule : R₁R₂R₃ N⁺ (CH₂)ₙ N⁺ R₄R₅R₆, n étant compris entre 3 et 14 et R₁ à R₆, identiques ou différents, pouvant représenter des radicaux alkyles ou hydroxyalkyles ayant de 1 à 8 atomes de carbone, jusqu'à cinq radicaux R₁ à R₆ pouvant être de l'hydrogène.

Ainsi, on pourra utiliser des germes d'au moins un solide de type structural LTA telle la zéolithe A, de type structural LTL, de type structural FAU telles les zéolithes X et Y, de type structural MOR, de type structural MAZ, de type structural OFF, de type structural FER, de type structural ERI, de type structural BEA, de type structural MFI telles la ZSM-5 et la silicalite, de type structural MTW, de type structural EUO, de type structural LEV, de type structural TON, de type structural NES telle la zéolithe NU-87, ou une zéolithe NU-85, NU-86, NU-88, IM-5 ou une zéolithe de type structural MTT de composition chimique de la charpente cristalline différente de la composition chimique de la charpente cristalline de la zéolithe MTT que l'on prépare, en particulier avec différents rapports X'/T'. De préférence on utilise comme germes pour la synthèse d'une zéolithe de type structural MTT des germes de zéolithes de type structural LTA, FAU, MOR, MFI et MTT, les germes de type structural MTT ayant un rapport X'/T' différent de celui de la zéolithe synthétisée.

Les matériaux zéolithiques jouant le rôle de germes peuvent être introduits à n'importe quel moment de la préparation de la zéolithe que l'on cherche à synthétiser. Les germes peuvent être introduits en même temps que les sources des éléments X et T, que le structurant organique Q, ou les germes peuvent être introduits en premier dans le mélange aqueux ou encore les germes peuvent être introduits après l'introduction des sources des éléments X et T et du structurant. De préférence, les germes sont introduits après homogénéisation au moins en partie du mélange aqueux contenant les sources des éléments X et T et le structurant.

Les matériaux zéolithiques jouant le rôle de germes peuvent être introduits lors de la synthèse de la zéolithe que l'on cherche à synthétiser sous plusieurs formes. Ainsi les germes peuvent être introduits, après avoir subi au moins l'une des étapes choisie parmi les étapes suivantes : lavage, séchage, calcination et échange ionique. Les germes peuvent également être introduits sous la forme brute de synthèse.

La taille des particules de germes peut avoir une influence sur le processus de synthèse et doit présenter de préférence le calibre souhaité. On entend par particule de germes de zéolithe, soit un cristal de zéolithe soit un agrégat de cristaux de zéolithe. Ainsi, au moins la majeure partie des particules de germes introduites lors de la préparation de matériau zéolithique ont une taille comprise entre 0,001 et 500 µm, de préférence entre 0,005 et 250 µm.

Dans une mise en oeuvre particulière, indépendante ou non de la mise en oeuvre précédente, il peut être avantageux d'ajouter au milieu réactionnel au moins un sel de métal alcalin ou d'ammonium P. On peut citer par exemple des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Ce sel peut accélérer la cristallisation des zéolithes MTT à partir du mélange réactionnel.

Dans le procédé selon l'invention, le mélange réactionnel a la composition suivante, exprimée sous la forme d'oxyde :

| | |
|---|---|
| XO₂/T₂O₃ (mol/mol) | au moins 10 |
| OH⁻/XO₂ (mol/mol) | 0,002 à 2,0 |
| Q/XO₂ (mol/mol) | 0,002 à 2,0 |
| Q/(M⁺ + Q) (mol/mol) | 0,1 à 1,0 |
| H₂O/XO₂ (mol/mol) | 1 à 500 |
| P/XO₂ (mol/mol) | 0 à 5 |
| S/XO₂ (g/g) | 0,0001 à 0,1 |

de manière préférée, le mélange réactionnel a la composition suivante, exprimée sous la forme d'oxydes :

| | |
|---|---|
| XO₂/T₂O₃ (mol/mol) | au moins 12 |
| OH⁻/XO₂ (mol/mol) | 0,005 à 1,5 |
| Q/XO₂ (mol/mol) | 0,005 à 1,5 |
| Q/(M⁺ + Q) (mol/mol) | 0,1 à 1,0 |
| H₂O/XO₂ (mol/mol) | 3 à 250 |
| P/XO₂ (mol/mol) | 0 à 1 |
| S/XO₂ (g/g) | 0,0005 à 0,07 |

et, de manière encore plus préférée, le mélange réactionnel a la composition suivante, exprimée sous la forme d'oxydes :

| | |
|---|---|
| XO₂/T₂O₃ (mol/mol) | au moins 15 |
| OH⁻/XO₂ (mol/mol) | 0,01 à 1 |
| Q/XO₂ (mol/mol) | 0,01 à 1 |
| Q/(M⁺ + Q) (mol/mol) | 0,1 à 1,0 |
| H₂O/XO₂ (mol/mol) | 5 à 100 |
| P/XO₂ (mol/mol) | 0 à 0,25 |
| S/XO₂ (g/g) | 0,001 à 0,04 |

où
X est le silicium et/ou le germanium,
T est au moins un élément choisi parmi l'aluminium, le fer, le gallium, le bore, le titane, le vanadium, le zirconium, le molybdène, l'arsenic, l'antimoine, le chrome et le manganèse,
M⁺ représente un métal alcalin ou l'ion ammonium,
Q représente le structurant organique ou les précurseurs dudit dérivé,
S représente les germes de zéolithe présents sous la forme brute, séchée, calcinée ou échangée, avec un rapport X'/T' inférieur à 200,
P représente le sel de métal alcalin ou d'ammonium.

M et/ou Q peuvent être présents sous forme d'hydroxydes ou de sels d'acides inorganiques ou organiques à la condition que le critère OH⁻ / XO₂ soit satisfait.

La quantité de germes introduite par rapport à la quantité d'oxyde XO₂ est comprise entre 0,001 et 10 %, et de préférence entre 0,05 et 7 %, et de manière encore plus préférée entre 0,1 et 4 %.

La synthèse de la zéolithe MTT selon le procédé de la présente invention est effectuée à l'aide d'un composé organique Q jouant le rôle de structurant.

Dans le cas de la synthèse de la zéolithe ZSM-23, les dérivés alkylés de α-ω polyméthylènediammonium Q préférés de départ sont, entre autres, les dérivés alkylés d'heptaméthylène α-ω diammonium, d'octaméthylène α-ω diammonium, d'undécaméthylène α-ω diammonium, de dodécaméthylène α-ω diammonium et spécialement les dérivés méthylés d'heptaméthylène α-ω diammonium d'octaméthylène α-ω diammonium, d'undécaméthylène α-ω diammonium, de dodécaméthylène α-ω diammonium et encore plus préférentiellement les sels de 1,7 N,N,N,N',N',N'-hexaméthylheptaméthylène α-ω diammonium, de 1,8 N,N,N,N',N',N'-hexaméthyloctaméthylène α-ω diammonium, de 1,11 N,N,N,N',N',N'-hexaméthylundécaméthylène α-ω diammonium, de 1,12 N,N,N,N',N',N'-hexaméthyldodécaméthylène α-ω diammonium par exemple l'halogénure, l'hydroxyde, le sulfate, le silicate, l'aluminate.

Les dérivés alkylés de polyméthylène α-ω diammonium peuvent être obtenus à partir de précurseurs. Les précurseurs appropriés des dérivés alkylés de polyméthylène α-ω diammonium de départ sont notamment les diamines apparentées conjointement avec des alcools, des halogénures d'alkyles, des alcanediols ou des dihalogénures d'alcane apparentés conjointement avec des alkylamines. Ils peuvent être mélangés tels quels avec les autres réactifs ou ils peuvent être préchauffés ensemble dans le récipient de réaction de préférence en solution avant l'addition des autres réactifs nécessaires pour la synthèse de la zéolithe MTT.

Le métal alcalin (M⁺) préféré est le sodium. L'élément préféré X est le silicium. L'élément T préféré est l'aluminium.

La source de silicium peut être l'une quelconque de celles dont l'utilisation est normalement envisagée pour la synthèse des zéolithes, par exemple la silice solide en poudre, l'acide silicique, la silice colloïdale ou la silice en solution. Parmi les silices en poudre utilisables, il convient de citer les silices précipitées, spécialement celles obtenues par précipitation à partir d'une solution d'un silicate de métal alcalin, comme les « Zeosil » ou les « Tixosil », produites par Rhône-Poulenc, les silices pyrogénées telles que les « Aerosil » produites par Degussa et les « Cabosil » produites par Cabot et les gels de silice. Des silices colloïdales de diverses granulométries peuvent être utilisées, comme celies vendues sous les marques déposées « LUDOX » de Dupont, et « SYTON » de Monsanto.

Les silices dissoutes utilisables sont notamment les verres solubles ou silicates commercialisés contenant : 0,5 à 6,0 et spécialement 2,0 à 4,0 moles de SiO₂ par mole d'oxyde de métal alcalin et les silicates obtenues par dissolution de silice dans un hydroxyde de métal alcalin, un hydroxyde d'ammonium quaternaire ou un mélange de ceux-ci.

La source d'aluminium est le plus avantageusement l'aluminate de sodium, mais peut aussi être l'aluminium, un sel d'aluminium, par exemple le chlorure, le nitrate ou le sulfate, un alcoolate d'aluminium ou l'alumine elle-même qui devrait de préférence se trouver sous une forme hydratée ou hydratable comme l'alumine colloïdale, la pseudoboehmite, la boehmite, l'alumine gamma, ou les trihydrates.

On peut utiliser des mélanges des sources citées ci-dessus. Des sources combinées de silicium et d'aluminium peuvent aussi être mises en oeuvre telles que les silice-alumines amorphes ou certaines argiles.

Le mélange de réaction est habituellement mis à réagir sous la pression autogène, éventuellement avec apport d'un gaz, par exemple d'azote, à une température comprise entre 85 et 250°C jusqu'à ce qu'il se forme des cristaux de la zéolithe, ce qui peut durer de 1 minute à plusieurs mois suivant la composition des réactifs, le mode de chauffage et de mélange, la température de travail et l'agitation. L'agitation est facultative, mais préférable, parce qu'elle abrège la durée de réaction.

Au terme de la réaction, la phase solide est collectée sur un filtre et lavée et est alors prête pour les opérations suivantes comme le séchage, la calcination et l'échange d'ions.

Ainsi, afin d'obtenir la forme hydrogène de la zéolithe de structure MTT, on peut effectuer un échange d'ions avec un acide, spécialement un acide minéral fort comme l'acide chlorhydrique, sulfurique ou nitrique, ou avec un composé tel que le chlorure, le sulfate ou le nitrate d'ammonium. L'échange d'ions peut être effectué par dilution en une ou plusieurs fois avec la solution d'échange d'ions. La zéolithe peut-être calcinée avant ou après l'échange d'ions, ou entre deux étapes d'échange d'ions, de préférence avant l'échange d'ions afin d'éliminer toute substance organique incluse, dans la mesure où l'échange d'ions s'en trouve facilité.

En règle générale, le ou les cations de la zéolithe de type structural MTT, peuvent être remplacés par un ou des cations quelconques de métaux et en particulier ceux des groupes IA, IB, IIA, IIB, IIIA, IIIB (y compris les terres rares), VIII (y compris les métaux nobles) de même que par le plomb, l'étain et le bismuth (Le tableau périodique. est tel que dans "Handbook of Physic and Chemistry", 76ème édition). L'échange est exécuté au moyen de sels hydrosolubles quelconques contenant le cation approprié.

La présente invention concerne également l'utilisation de la zéolithe telle que préparée selon le procédé de la présente invention comme adsorbant pour le contrôle de la pollution, comme tamis moléculaire pour la séparation et comme solide acide pour la catalyse dans les domaines du raffinage et de la pétrochimie.

Par exemple, lorsqu'elle est utilisée comme catalyseur, la zéolithe de structure MTT peut être associée à une matrice inorganique qui peut être inerte ou catalytiquement active et à une phase métallique. La matrice inorganique peut être présente simplement comme liant pour maintenir ensemble les petites particules de la zéolithe sous les différentes formes connues des catalyseurs (extrudés, billes, poudres), ou bien peut être ajoutée comme diluant pour imposer le degré de conversion dans un procédé qui progresserait sinon à une allure trop rapide conduisant à un encrassement du catalyseur en conséquence d'une formation exagérée de coke. Des matrices inorganiques typiques sont notamment des matières de support pour les catalyseurs comme la silice, les différentes formes d'alumine, et les argiles kaoliniques, les bentonites, les montmorillonites, la sépiolite, l'attapulgite, la terre à foulon, les matières poreuses synthétiques comme SiO₂-Al₂O_{3,}SiO₂-ZrO₂, SiO₂-ThO_{2,} SiO₂-BeO, SiO₂-TiO₂ ou toute combinaison de ces composés.

La zéolithe de type structural MTT peut aussi être associée à au moins une autre zéolithe et jouer le rôle de phase active principale ou d'additif.

La matrice inorganique peut être un mélange de différents composés, en particulier d'une phase inerte et d'une phase inorganique.

La phase métallique est introduite sur la zéolithe seule, la matrice inorganique seule ou l'ensemble matrice inorganique-zéolithe par échange d'ions ou imprégnation avec des cations ou oxydes choisis parmi les suivants, Cu, Ag, , Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, lr et tout autre élément de la classification périodique des éléments.

Les compositions catalytiques comportant la zéolithe de type structural MTT peuvent _trouver leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, de reformage, d'hydrogénation et de déshydrogénation, d'oxydation, d'halogénation, de synthèses d'amines, d'hydrodésulfuration et d'hydrodénitrification, d'élimination catalytique des oxydes d'azote, la formation d'éther et la conversion d'hydrocarbures et la synthèse de composés organiques en général, lesdites réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

L'invention concerne tout particulièrement l'utilisation de la zéolithe de type structural MTT comme catalyseur pour l'isomérisation des paraffines linéaires.

L'isomérisation (l'hydro-isomérisation) des paraffines linéaires ayant de 4 à 8 atomes de carbone par molécule peut être réalisée avec des catalyseurs bifonctionnels, associant une fonction acide et une fonction hydro-déshydrogénante.

Le catalyseur selon l'invention comprenant au moins une zéolithe de type structural MTT peut-être utilisé dans tout procédé d'isomérisation (ou d'hydroisomérisation) de paraffines C₅-C₁₀, de préférence C₇-C₁₀, de manière très préférée C₇-C₉ et de manière encore plus préférée C₇-C₈. Le catalyseur selon l'invention est particulièrement bien adapté à un procédé de préparation d'essences à haut indice d'octane, associant une isomérisation catalytique et une séparation.

Il est plus particulièrement bien adapté au procédé décrit dans la demande de brevet FR 97/14 891, qui comprend une section isomérisation et au moins une section permettant la séparation des paraffines dibranchées et tribranchées.

Le catalyseur à base de zéolithe MTT selon l'invention contient au moins une matrice à une teneur comprise entre 1 et 90 %, de préférence entre 5 et 90 % et de manière encore plus préférée entre 10 et 85 %.

Les matrices utilisée pour réaliser la mise en forme du catalyseur sont à titre d'exemples et de façon non limitative, les gels d'alumine, les alumines, la magnésie, les silice-alumines amorphes, et leurs mélanges. Des techniques telles que l'extrusion, le pastillage ou la dragéification, peuvent être utilisées pour réaliser l'opération de mise en forme.

Le catalyseur comporte aussi une fonction hydro-déshydrogénante assurée, par exemple, par au moins un élément du groupe VIII et de préférence au moins un élément compris dans l'ensemble formé par le platine et le palladium. La teneur pondérale en métal non noble du groupe VIII, par rapport au catalyseur final, est comprise entre 1 et 40 % de préférence entre 10 et 30 %. Dans ce cas, le métal non noble est souvent associé à au moins un métal du groupe VIB (Mo et W préférés). S'il s'agit d'au moins un métal noble du groupe VIII, la teneur pondérale, par rapport au catalyseur final, est inférieure à 5 %, de préférence inférieure à 3 % et de manière encore plus préférée inférieure à 1,5 %.

Dans le cas de l'utilisation de métaux nobles du groupe VIII, le platine et/ou le palladium sont de préférence localisés sur la matrice, définie comme ci-dessus.

L'isomérisation (l'hydro-isomérisation) est effectuée dans au moins un réacteur. La température est comprise entre 150 et 350°C, de préférence entre 200 et 300°C, et la pression partielle d'hydrogène est comprise entre 0,1 et 7 MPa, de préférence entre 0,5 et 5 MPa. La vitesse spatiale est comprise entre 0,2 et 10 litres d'hydrocarbures liquides par litre de catalyseur et par heure, de préférence entre 0,5 et 5 litres d'hydrocarbures liquides par litre de catalyseur et par heure. Le rapport molaire hydrogène/charge à l'entrée du réacteur est tel que le rapport molaire hydrogène/charge dans l'effluent sortant du réacteur est généralement supérieur à 0,01, de préférence compris entre 0,01 et 50, de manière plus préférée compris entre 0,06 et 20.

L'invention est illustrée par les exemples suivants.

### EXEMPLES 1 à 8 :

Les exemples suivants illustrent la synthèse d'une zéolithe ZSM-23 de rapport Si/Al voisin de 18 avec le bromure d'octaméthonium comme structurant organique et des germes de zéolithe de structure et/ou de rapport Si/AI différents.

Les exemples 1 et 2 correspondent à des synthèses réalisées sans ajout de germes pour comparaison. Les exemples 3 à 7 correspondent à des synthèses réalisées avec les germes de zéolithe dont les caractéristiques sont reportées ci-après.

Les zéolithes ajoutées en tant que germes se présentent sous différentes formes cationiques (Na, NH₄, NH₄+Octa, NH₄+Déca, H) et sous formes de particules de taille variable (de 3 à 115 µm pour le diamètre médian Dv,50). Ces germes sont différents du solide ZSM-23 synthétisé au niveau du type structural et/ou du rapport Si/Al.

| **Germes** | | | | | | | |
|---|---|---|---|---|---|---|---|
| **Exemples** | **zéolithe** | **type structure** | **Si/Al (mol/mol)** | **forme (cations)** | **Dv,10 (µm)** | **Dv,50 (µm)** | **Dv,90 (µm)** |
| 1 (comparatif) | sans germes | | | | | | |
| 2 (comparatif) | sans germes | | | | | | |
| 3 (invention) | ZSM-5 | MFI | 27,7 | H | 48 | 115 | 205 |
| 4 (invention) | X | FAU | 1,3 | Na- | 1,3 | 3,4 | 8,7 |
| 5 (invention) | Y | FAU | 2,8 | NH₄ | 1,4 | 3,1 | 7,0 |
| 6 (invention) | mordénite | MOR | 118 | H | 5,1 | 15 | 26 |
| 7 (invention) | NU-87 | NES | 17,0 | Na+Deca | 7 | 23 | 36 |
| 8 (invention) | ZSM-23 | MTT | 57 | Na+Octa | 5 | 19 | 29 |
| Octa = octaméthonium | | | | | | | |
| Deca = décaméthonium | | | | | | | |
| Dv,X = diamètre de la sphère équivalente des particules tel que X % volume des particules ont une taille inférieure audit diamètre | | | | | | | |

Le mélange de synthèse a la composition suivante :

| | |
|---|---|
| **SiO**_{**2**} **(mol)** | 60 |
| **Al**_{**2**}**O**_{**3**} **(mol)** | 1,5 |
| **Na**_{**2**}**O (mol)** | 9 |
| **OctaBr**_{**2**} **(mol)** | 10 |
| **H**_{**2**}**O (mol)** | 3000 |
| **germes/SiO**_{**2**} **(g/g)** | 0 (ex. 1 et 2) ou 0,04 (ex. 3 à 8) |
| OctaBr₂ = bromure d'octaméthonium = Me₃ N (CH₂)₈ N Me₃ ²⁺ (Br⁻)₂ | |

On prépare la solution A composée de silicium et de structurant en diluant le bromure d'octaméthonium (Fluka, 97 %) dans 80 % de l'eau nécessaire à la formation du gel puis en ajoutant le sol de silice colloïdal (Ludox HS40, Dupont, 40 % SiO₂). On dissout ensuite l'hydroxyde de sodium solide (Prolabo, 99 %) et l'aluminate de sodium solide (Prolabo, 46 % Al₂O₃, 33 % Na₂O) dans 10 % de l'eau nécessaire à la formation du gel pour former la solution B. On ajoute la solution B dans la solution A sous agitation puis le restant d'eau (10 %). On mélange jusqu'à homogénéisation et on ajoute les germes de zéolithe séchée. On fait réagir le mélange résultant dans un autoclave de 125 ml sous agitation à 180°C sous la pression autogène, jusqu'à cristallisation de la zéolithe. Après refroidissement, on filtre le produit et on le lave avec 0,5 litre d'eau déminéralisée puis on le sèche en étuve ventilée à 120°C.

Les résultats de diffraction des rayons X et d'analyse chimique sont reportés dans le tableau suivant en fonction des conditions de cristallisation.

| **Exemples** | **Température (°C)** | **Temps (j)** | **ZSM-23 (%,DRX)** | **Si/Al (mol/mol,FX)** | **Rendement (%)** |
|---|---|---|---|---|---|
| **1 (comparatif)** | 180 | 12 | 100 | 18,9 | 4,7 |
| **2 (comparatif)** | 180 | 8,1 | 25 (+AMO) | nd | 4,9 |
| **3 (invention)** | 180 | 8,1 | 101 | 18,5 | 4,8 |
| **4 (invention)** | 180 | 8,1 | 98 | 18,6 | 4,6 |
| **5 (invention)** | 180 | 8,1 | 100 | 18,3 | 4,5 |
| **6 (invention)** | 180 | 8,1 | 102 | 18,2 | 4,7 |
| **7 (invention)** | 180 | 8,1 | 100 | 17,8 | 4,8 |
| **8 (invention)** | 180 | 8,1 | 101 | 18,6 | 4,6 |
| AMO : amorphe | | | | | |
| DRX = Diffraction des rayons X, avec pour référence l'exemple 1 | | | | | |
| FX= fluorescence X | | | | | |

L'utilisation des différentes zéolithes de structure ou de rapport Si/AI différent de la zéolithe ZSM-23 synthétisée en tant que germes (exemples 3 à 8) conduit à la zéolithe ZSM-23 pure (cristallinité de 100 % ±3, rapport Si/AI voisin de 18), de rendement maximal (environ 5 %) en 8 jours à 180°C. Dans les conditions identiques, l'expérience sans addition de germes (exemple 2) ne produit pas complètement la zéolithe ZSM-23. Ainsi, dans l'exemple 1, il faut aller jusqu'à 12 jours de durée de synthèse pour permettre la formation de la zéolithe ZSM-23 pure et de rendement maximal.

### Exemple 9 : Préparation conforme à l'invention du catalyseur C1

La zéolithe ZSM-23 est préparée selon l'exemple 5. Le solide ainsi synthétisé est soumis à une calcination sous air sec durant 12 h à 550°C, puis à trois échanges ioniques successifs par une solution de nitrate d'ammonium, de manière à obtenir la forme NH₄⁺ de la zéolithe.

Pour cela, 10 grammes de la zéolithe ZSM-23, issue de l'exemple 5, sont mis en suspension dans 100 ml d'une solution molaire de nitrate d'ammonium (5M), puis agités sous reflux durant 2 heures. Le solide est ensuite filtré, lavé. Ce cycle de traitement est reproduit encore deux fois supplémentaires. Le solide obtenu est ensuite séché à 60°C durant 10 heures.

La zéolithe ZSM-23 après ce traitement possède un rapport Si/Al=18,7 et une teneur en Na de l'ordre de 15 ppm poids

La zéolithe préparée ci-dessus est alors malaxée avec un gel d'alumine. La pâte malaxée est ensuite extrudée à travers une filière de diamètre 1,4 mm. La teneur en zéolithe ZSM-23 de type structural MTT dans le support (zéolithe + matrice) est de 80% poids.

Un dépôt de platine en utilisant une solution du sel de platine H₂PtCl₆ est réalisée de telle manière à obtenir une teneur en platine sur le support de 0,5 % poids. Le catalyseur ainsi obtenu est dénommé C1. La dispersion du platine mesurée par titrage H₂/O₂ après calcination à 450°C, sous air sec, et réduction sous hydrogène à 420°C, est d'environ 82%.

### Exemple 10 : Evaluation catalytique du catalyseur C1 en hydro-isomérisation du n-heptane

Préalablement à son évaluation catalytique le catalyseur C1 est soumis à une calcination à 450°C sous air sec durant 4 heures. La montée en température est réalisée à une vitesse de 5°C/minute et deux paliers d'une heure chacun sont respectés à 150°C et 300°C.

La réduction de la phase métallique est réalisée in situ dans le réacteur catalytique juste avant la réalisation du test.

Les conditions de réduction pour les trois catalyseurs, sont les suivantes :
- montée en température à 7°C/minute jusqu'à 150°C sous flux d'hydrogène, palier de 30 minutes,
- puis de nouveau montée en température à 7°C/minute jusqu'à 300°C sous flux d'hydrogène, palier de 30 minutes,
- puis finalement montée en température à 7°C/minute jusqu'à 450°C sous flux d'hydrogène, palier de 60 minutes.

La température est ensuite diminuée jusqu'à la valeur de la température de réaction qui est de 230°C. Les tests catalytiques sont réalisés dans un réacteur à lit fixe en phase gazeuse. La molécule isomérisée (hydro-isomérisée) en présence d'hydrogène est le n-heptane (de pureté 99,9%), et le rapport molaire hydrogène sur n-heptane, utilisée dans les divers tests catalytiques, est de 2. La vitesse spatiale, c'est à dire la masse de n-heptane injecté par gramme de catalyseur et par heure est de 2,4 h-1.

Les produits formés sont soit des produits de craquage C₁ à C₆, soit des produits à 7 atomes de carbone par molécule, isomères du n-heptane, ou bien encore des produits aromatiques provenant des réactions d'aromatisation du n-heptane.

Les résultats catalytiques obtenus sont regroupés dans le tableau ci-après :

| **% poids** | **Catalyseur C1 contenant la zéolithe ZSM-23 conforme à l'invention** |
|---|---|
| Conversion n-C7 | 73 |
| Rendement en produits de C₁-C₆ - Craquage | 14 |
| Rendement Isomérisation | 59 |

Ce tableau met en évidence que l'utilisation d'un catalyseur comprenant une zéolithe ZSM-23 selon l'invention (catalyseur C1) permet un de réaliser l'hydroisomérisation du n-heptane.

## Revendications

1. Procédé de préparation d'un matériau zéolithique de type structural MTT comprenant au moins un élément X choisi parmi le silicium et le germanium et au moins un élément T choisi parmi le fer, l'aluminium, le gallium, bore, le titane, le vanadium, le zirconium, le molybdène, l'arsenic, l'antimoine, le chrome et le manganèse **caractérisé en ce qu'**on utilise des germes d'au moins un matériau zéolithique comprenant au moins un élément X' choisi parmi le silicium et le germanium et au moins un élément T' choisi parmi le fer, l'aluminium, le gallium, le bore, le titane, le vanadium, le zirconium, le molybdène, l'arsenic, l'antimoine, le chrome et le manganèse, de rapport X'/T' inférieur à 200, lesdits germes étant différents de la zéolithe de type structural MTT que l'on prépare.

2. Procédé selon la revendication 1 dans lequel les germes de matériau zéolithique ont un type structural différent du type structural MTT.

3. Procédé selon l'une des revendications 1 à 2 tel que les germes ont une composition chimique de la charpente cristalline différente de la composition chimique de la charpente cristalline de la zéolithe de type structural MTT que l'on prépare.

4. Procédé selon l'une des revendications 1 à 3 tel que le matériau zéolithique utilisé comme germes est choisi parmi les zéolithes de type structural LTA telle la zéolithe A, de type structural LTL, de type structural FAU telles les zéolithes X et Y, de type structural MOR, de type structural MAZ, de type structural OFF, de type structural FER, de type structural ERI, de type structural BEA, de type structural MFI telles la ZSM-5 et la silicalite, de type structural MTW, de type structural EUO, de type structural LEV, de type structural TON, de type structural NES telle la zéolithe NU-87, les zéolithes NU-85, NU-86, NU-88, IM-5, ou les zéolithes de type structural MTT de composition chimique de la charpente cristalline différente de la zéolithe MTT que l'on prépare.

5. Procédé selon l'une des revendications 1 à 4 tel que les germes utilisés sont choisis parmi des germes d'au moins un matériau zéolitique de type structural LTA, FAU, MOR, MFI et MTT.

6. Procédé selon l'une des revendications 1 à 5 comprenant la synthèse d'un mélange aqueux comprenant au moins une source d'au moins un élément X et au moins une source d'au moins un élément T, au moins une source d'un structurant organique et des germes d'au moins un matériau zéolithique.

7. Procédé selon l'une des revendications 1 à 6 dans lequel les germes de matériau zéolithique sont introduits à n'importe quel moment de la préparation.

8. Procédé suivant l'une des revendications 1 à 7 dans lequel les germes de matériau zéolithique sont introduits après l'homogénéisation au moins en partie du mélange aqueux contenant la source d'élément X, la source d'élément T, la source de structurant organique.

9. Procédé selon l'une des revendications 1 à 8 tel que l'élément X est le silicium et l'élément T est l'aluminium.

10. Procédé selon l'une des revendications 1 à 9 tel que le structurant organique est un dérivé alkylé de polymethylène α-ω diammonium de formule : R₁R₂R₃ N⁺ (CH₂)ₙ N⁺ R₄R₅R₆ et/ou un produit de dégradation d'amine correspondant audit dérivé et/ou un précurseur correspondant audit dérivé, n étant compris entre 3 et 14 et R₁ à R₆, identiques ou différents, pouvant représenter des radicaux alkyles ou hydroxyalkyles ayant de 1 à 8 atomes de carbone, jusqu'à cinq des radicaux R₁ à R₆ pouvant être de l'hydrogène.

11. Procédé selon l'une des revendications 1 à 10 tel qu'on introduit au moins un sel P de métal alcalin ou d'ammonium.

12. Procédé selon l'une des revendications 1 à 11 dans lequel le mélange réactionnel a la composition suivante, exprimée sous forme d'oxydes :
| | |
|---|---|
| XO₂/T₂O₃ (mol/mol) | au moins 10 |
| OH⁻/XO₂ (mol/mol) | 0,002 à 2,0 |
| Q/XO₂ (mol/mol) | 0,002 à 2 |
| Q/(M⁺ + Q) (mol/mol) | 0,1 à 1,0 |
| H₂O/XO₂ (mol/mol) | 1 à 500 |
| P/XO₂ (mol/mol) | 0 à 5 |
| S/XO₂ (g/g) | 0,0001 à 0,1 |
où
X est le silicium et/ou le germanium,
T est au moins un élément choisi parmi l'aluminium, le fer, le gallium, le bore, le titane, le vanadium, le zirconium, le molybdène, l'arsenic, l'antimoine, le chrome et le manganèse
M⁺ représente un métal alcalin ou l'ion ammonium,
Q représente le structurant organique, ou les produits de décomposition correspondant audit dérivé ou les précurseurs dudit dérivé,
S représente les germes de zéolithe présents sous la forme brute, séchée, calcinée ou échangée, avec un rapport X'/T' inférieur à 200.
P représente le sel de métal alcalin ou d'ammonium.

## Claims

1. A process for preparing a zeolite with structure type MTT comprising at least one element X selected from silicon and germanium and at least one element T selected from iron, aluminium, gallium, boron, titanium, vanadium, zirconium, molybdenum, arsenic, antimony, chromium and manganese, **characterized in that** seeds of at least one zeolitic material are used comprising at least one element X' selected from silicon and germanium and at least one element T' selected from iron, aluminium, gallium, boron, titanium, vanadium, zirconium, molybdenum, arsenic, antimony, chromium and manganese, with an X'/T' ratio of less than 200, said seeds being different from the zeolite with structure type MTT being prepared.

2. A process according to claim 1, in which the structure type of the zeolitic material seeds is different from structure type MTT.

3. A process according to claim 1 or claim 2, in which the chemical composition of the crystalline framework of the seeds is different from the chemical composition of the crystalline framework of the zeolite with structure type MTT being prepared.

4. A process according to any one of claims 1 to 3, in which the zeolitic material used as a seed is selected from zeolites with structure type LTA such as A zeolite, with structure type LTL, structure type FAU such as X and Y zeolites, structure type MOR, structure type MAZ, structure type OFF, structure type FER, structure type ERI, structure type BEA, structure type MFI such as ZSM-5 and silicalite, structure type MTW, structure type EUO, structure type LEV, structure type TON, structure type NES such as NU-87 zeolite, NU-85, NU-86, NU-88 or IM-5 zeolite or a zeolite with structure type MTT with a chemical composition of the crystalline framework which is different from that of the MTT zeolite being prepared.

5. A process according to any one of claims 1 to 4, in which the seeds used are selected from seeds of at least one zeolitic material with structure type LTA, FAU, MOR, MFI, MTT.

6. A process according to any one of claims 1 to 5, comprising synthesis of an aqueous mixture comprising at least one source of at least one element X and at least one source of at least one element T, at least one source of an organic template and seeds of at least one zeolitic material.

7. A process according to any one of claims 1 to 6, in which the seeds of zeolitic material are introduced at any time during the preparation.

8. A process according to any one of claims 1 to 7, in which the seeds of zeolitic material are introduced after at least partial homogenisation of the aqueous mixture containing the source of the element X, the source of the element T and the source of the organic template.

9. A process according to any one of claims 1 to 8, in which the element X is silicon and element T is aluminium.

10. A process according to any one of claims 1 to 9, in which the organic template is an alkylated α-ω diammonium polymethylene derivative with formula: R₁R₂R₃N⁺(CH₂)ₙN⁺R₄R₅R₆, and/or a degradation product of the amine corresponding to said derivative and/or a precursor corresponding to said derivative, n being in the range 3 to 14 and R₁ to R₆, which may be identical or different, representing alkyl or hydroxyalkyl radicals containing 1 to 8 carbon atoms; up to five R₁ to R₆ radicals possibly being hydrogen.

11. A process according to any one of claims 1 to 10, in which at least one alkali metal or ammonium P salt is introduced.

12. A process according to any one of claims 1 to 11, in which the reaction mixture has the following composition, expressed in the oxide form:
| | |
|---|---|
| XO_{2/}T₂O₃ (mol/mol) | at least 10 |
| OH⁻/XO₂ (mol/mol) | 0.002 to 2.0 |
| Q/XO₂ (mol/mol) | 0.002 to 2.0 |
| Q/(M⁺ + Q) (mol/mol) | 0.1 to 1.0 |
| H₂O/XO₂ (mol/mol) | 1 to 500 |
| P/XO₂ (mol/mol) | 0 to 5 |
| S/XO₂ (g/g) | 0.0001 to 0.1 |
where
X is silicon and/or germanium;
T is at least one element selected from aluminium, iron, gallium, boron, titanium, vanadium, zirconium, molybdenum, arsenic, antimony, chromium and manganese;
M⁺ represents an alkali metal or an ammonium ion;
Q represents the organic template or the decomposition products corresponding to said derivative or precursors of said derivative;
S represents zeolite seeds expressed in their as synthesised, dried, calcined or exchanged form with an X'/T' ratio of less than 200;
P represents the alkali metal or ammonium salt.

## Patentansprüche

1. Verfahren zur Herstellung eines zeolithischen Materials vom MTT-Strukturtyp, umfassend: wenigstens ein Element X, gewählt aus Silizium und Germanium und wenigstens ein Element T, gewählt aus Eisen, Aluminium, Gallium, Bor, Titan, Vanadium, Zirkonium, Molybdän, Arsen, Antimon, Chrom und Mangan, **dadurch gekennzeichnet, dass** man Keime wenigstens eines zeolithischen Materials verwendet, umfassend: wenigstens ein Element X', gewählt aus Silizium und Germanium und wenigstens ein Element T', gewählt aus Eisen, Aluminium, Gallium, Bor, Titan, Vanadium, Zirkonium, Molybdän, Arsen, Antimon, Chrom und Mangan, wobei das Verhältnis X'/T' kleiner als 200 ist und diese Keime verschieden vom Zeolithen des MTT-Strukturtyps, den man herstellt, sind.

2. Verfahren nach Anspruch 1, bei dem die Keime des zeolithischen Materials einen Strukturtyp unterschiedlich vom MTT-Strukturtyp haben.

3. Verfahren nach einem der Ansprüche 1 bis 2, der Art, dass die Keime eine chemische Zusammensetzung des kristallinen Gerüstes unterschiedlich zur chemischen Zusammensetzung des kristallinen Gerüstes des Zeolithen vom MTT-Strukturtyp, den man herstellt, haben.

4. Verfahren nach einem der Ansprüche 1 bis 3, der Art, dass das zeolithische als Keime gewählte Material gewählt ist aus den Zeolithen vom LTA-Strukturtyp wie Zeolith A, vom LTL-Strukturtyp, vom FAU-Strukturtyp wie die X- und Y-Zeolithe, vom MOR-Strukturtyp, vom MAZ-Strukturtyp, vom OFF-Strukturtyp, vom FER-Strukturtyp, vom ERI-Strukturtyp, vom BEA-Struturtyp, vom MFI-Strukturtyp wie die ZSM-5-Zeolithe und Silicalit vom Strukturtyp MTW, vom Strukturtyp EUO, vom Strukturtyp LEV, vom Strukturtyp TON, vom Strukturtyp NES wie der NU-87-Zeolith, die NU-85-, NU-86-, NU-88-, IM-5-Zeolithe oder die Zeolithe vom MTT-Strukturtyp einer chemischen Zusammensetzung des kristallinen Gerüstes unterschiedlich zum MTT-Zeolithen, den man herstellt.

5. Verfahren nach einem der Ansprüche 1 bis 4, **dadurch gekennzeichnet, dass** die verwendeten Keime gewählt sind aus den Keimen wenigstens eines zeolithischen Materials vom Strukturtyp LTA, FAU, MOR, MFI und MTT.

6. Verfahren nach einem der Ansprüche 1 bis 5 umfassend die Synthese eines wässrigen Gemisches, das wenigstens eine Quelle wenigstens eines Elements X und wenigstens eine Quelle wenigstens eines Elements T, wenigstens eine Quelle eines organischen Strukturbildners und Keime wenigstens eines zeolithischen Materials umfasst.

7. Verfahren nach einem der Ansprüche 1 bis 6, bei dem die Keime des zeolithischen Materials zu einem beliebigen Moment der Herstellung eingeführt werden.

8. Verfahren nach einem der Ansprüche 1 bis 7, bei dem die Keime des zeolithischen Materials nach wenigstens teilweiser Homogenisierung des wässrigen Gemisches, das die Quelle für das Element X, die Quelle für das Element T und die Quelle für den organischen Strukturbildner enthält, eingeführt werden.

9. Verfahren nach einem der Ansprüche 1 bis 8, der Art, dass das Element X Silizium und das Element T Aluminium ist.

10. Verfahren nach einem der Ansprüche 1 bis 9, der Art, dass der organische Strukturbildner ein alkylhaltiges Derivat von Polymethylen α-ω Diammonium der Formel ist: R₁R₂R₃ N⁺ (CH₂)ₙ N⁺ R₄R₅R₆ und/oder ein Abbauprodukt des Amins entsprechend dem Derivat und/oder einem Vorläufer entsprechend diesem Derivat, wobei n zwischen 3 und 14 und R₁ bis R₆ identisch oder unterschiedlich sind und Alkylradikale oder Hydroxyalkylradikale mit 1 bis 8 Kohlenstoffatomen darstellen können, wobei bis zu fünf der Radikale R₁ bis R₆ Wasserstoff sein können.

11. Verfahren nach einem der Ansprüche 1 bis 10, der Art, dass man wenigstens ein Salz P von Alkalimetall oder Ammonium einführt.

12. Verfahren nach einem der Ansprüche 1 bis 11, bei dem das Reaktionsgemisch die folgende Zusammensetzung, ausgedrückt in Form von Oxiden, hat:
| | |
|---|---|
| XO₂/T₂O₃ (Mol/Mol) | wenigstens 10 |
| OH⁻/XO₂ (Mol/Mol) | 0,002 bis 2,0 |
| Q/XO₂ (Mol/Mol) | 0,002 bis 2 |
| Q/(M⁺ + Q) (Mol/Mol) | 0,1 bis 1,0 |
| H₂O/XO₂ (Mol/Mol) | 1 bis 500 |
| P/XO₂ (Mol/Mol) | 0 bis 5 |
| S/XO₂ (g/g) | 0,0001 bis 0,1 |
wo
X Silizium und/oder Germanium ist,
T wenigstens ein Element gewählt aus Aluminium, Eisen, Gallium, Bor, Titan, Vanadium, Zirkonium, Molybdän, Arsen, Antimon, Chrom und Mangan ist,
M⁺ ein Alkalimetall oder ein Ammoniumion darstellt,
Q der organische Strukturbildner oder die Zersetzungsprodukte entsprechend dem Derivat oder den Vorläufern dieses Derivats sind,
S die Zeolithkeime bedeutet, die in roher, getrockneter, kalzinierter oder ausgetauschter Form bei einem Verhältnis X'/T' kleiner 200 vorhanden sind und
P das Salz des Alkalimetalls oder Ammoniums darstellt.
